Europäisches Patentamt

**European Patent Office**

**Office européen des brevets**

(19)

(11) Publication number: **0 068 217**
A2

(12) # EUROPEAN PATENT APPLICATION

(21) Application number: **82105091.1**

(22) Date of filing: **10.06.82**

(51) Int. Cl.³: **G 01 N 31/00**

(30) Priority: **01.07.81 IT 2267381**

(43) Date of publication of application: **05.01.83**
**Bulletin 83/1**

(84) Designated Contracting States: **AT BE CH DE FR GB LI NL SE**

(71) Applicant: **CARLO ERBA STRUMENTAZIONE S.p.A.,**
**I-20090 Rodano Milano (IT)**

(72) Inventor: **Trestianu, Sorin, 7, place de la Petite Suisse,**
**Bruxelles (BE)**
Inventor: **Sisti, Giorgio, 7, Piazza S. Agostino, Milan (IT)**

(74) Representative: **Marietti, Giuseppe, CENTRO DI**
**CONSULENZA IN PROPRIETA' INDUSTRIALE viale**
**Caldara, 43, I-20122 Milano (IT)**

(54) **Sampling method and device.**

(57) This invention concerns a sampling method and device for small quantities of liquid sample in chromatographic analytical systems. This method includes the formation of an aerosol by dispersion of the liquid sample in a gas at predetermined dilution ratio; the drawing of the whole sample or part of it; and the introduction of a measured amount of the drawn aerosol into the chromatographic analytical system. The aerosol must be stable until its introduction into the chromatographic system and can be formed in a continuous or discontinuous way inside a closed container or in an open conveyor.

The present invention concerns a sampling method and device specially for feeding small amounts of liquid samples in chromatographic analytical systems.

These method and device are particularly, even if not exclusively, suitable for high resolution gas chromatographic systems, with capillary or micropacked columns, and moreover they are capable of performing controllable and reproducible sampling of very small amounts of sample, with values that cannot be obtained using the techniques generally employed for liquid sampling in chromatographic systems and in particular using microsyringes.

In fact microsyringes used in chromatography are generally of the gauged-body type (capable of sampling amounts from 0.2 to 10 microliters) or of the gauged-needle type, in which the plunger penetrates into the needle. The latter microsyringes are capable of handling smaller quantities of samples, in a reliable and reproducible way, but only within certain limits, in particular within lower limits of 50-100 nanoliters. Below this limit, the high surface tension of the liquid and the relatively reduced speed of the plunger movement do not allow the drop formed at the needle tip to fall down securely from the latter, considering the reduced diameter of the needle outlet nozzle. Precision is furthermore negatively affected by poor sealing between plunger and gauged needle.

Therefore, it is to be understood that, according to the nature of the liquid substance to be injected, there

0068217

is a minimum lower limit, generally ranging between 50 and 100 nanoliters, below which it is not possible to go in reliable and reproducible sampling with microsyringes.

This involves that the operator is often forced to per form additional operations, as required by the relatively high amounts of sample to be introduced on to the capillary column. In particular, in case of a direct non-vaporizing on-column injection, the sample must be diluted, in a dilution ratio which is often very high (in the region of 1:10000 or more), while in the case of vaporization injection, it is necessary to provide for a sample dilution or a splitting operation in vapour phase, performed on a sample which is already vaporized and mixed with carrier. Splitting comprises elimination of a high percentage of the injected sample amount before its introduction on to column. Said operations of sample dilution or splitting in vapour phase risk to entail difficulties for the exact analytical determination of the sample, in that they can involve discriminations or variations in the original con ditions of the sample during injection. Specially in the case of vaporization, it can occur (and really often occurs) that the liquid sample does not completely vaporize before reaching the splitting zone. Consequently, the result is the formation of a vapour phase and a liquind pha se which not only have different compositions (as it is obvious because the liquid phase is more concentrated in high-boiling substances), but also form a dispersion having a non homogeneous and random variable spatial distri bution, as well as a global chemical composition different than the starting one, due to previous discriminations. Therefore, in general, it occurs that the composition of

0068217

the sample part introduced into the chromatographic system
is different form that of the sample part separated during
splitting and above that the first composition is different
from that of the original sample.

A splitting operation in liquid phase has been attempted
(see Schomburg & al. -; Journal of Chromatography - 204
(1981) 85 -) but the results obtained have proved that it
is not possible to perform a sample partition in a reliable and reproducible way below given volumetric values.


Now, an object of the present invention is to provide
a method and device which allow to perform sampling in      -
chromatographic systems with any sample amount and in particular with very small amounts of liquid sample, for instance from 0.1 to 100 nanoliters, or even less, in a relia
ble and reproducible way, so to assure both that the chemi- mical composition of the sample introduced into the chroma
tographic system corresponds to that of the original sample
(absence of discriminations) and that amounts of introduced
sample, though small, can be controlled in such a manner
as to result always the same, when sampling is carried out
under tha same conditions.

According to the invention, a sampling method is characte
rized in that an aerosol is formed with a liquid sample and
a gaseous substance, and in that the system of chromatographic analysis is then supplied with a volumetrically predetermined amount of said aerosol, to which a predetermined
amount of liquid sample corresponds, said aerosol remaining
stable and homogeneous at least until its introduction into
the analytical system.

In order to distinguish the aerosol, as intended in the present description and claims, from the case of sample va porized by normal injection vaporization, it must be noticed that, according to the invention, conditions of temperature, pressure and diameter of the drops (obviously in relation to the sample) are established in such a way as to limit or tend to stop liquid vaporization, so that said aerosol quickly stabilizes in space before being introduced into the chromatographic system. This means that aerosol remains in such condition until its introduction into the chromatographic system and that any portion of same, taken in any point of the space it occupies or in any moment between the aerosol formation and its introduction into the chromatographic system, has a global chemical com position (liquid + liquid vapours + gas) which is always the same and corresponds to the starting one.

On the contrary, in the known vaporization systems, va porization is forced and continues during the whole sampling stage. In the latter case, therefore, the composition of the sample varies during the sampling operation and even does not result spatially homogeneous.

To obtain said aerosol stability, temperature conditions are such as to assure that saturation pressure of the sample compounds in the aerosol has a reduced value. On the contrary, the size of the drops is such as to obtain an extremely high exchange surface, so that the mass transfer from liquid to vapour, under these conditions rapidly occurs and the balance between the phases is established in short times.

The aerosol stability, moreover, requires that the aerosol volume, either in the case it remains constant or in the case it changes, always results homogeneous, meaning that

0068217

at any moment the liquid/gas volumetric ratio be equal in any point. This is obtained when the drops have a so small diameter that their movements are of the Brownian type.

The formation of an aerosol according to the principles of the invention allows therefore to obtain a dispersion of the liquid in the gas which is homogeneous in space and stable in time and which, being a cold operation (for instance at room temperature), does not entail the danger of discriminations. Consequently, said aerosol can be used in any moment, in any zone and in any way, with the certainty that said characteristics of reliability and reproducibili ty of sampling remain unaltered.

These conditions are proved in particular when the gaseous substance forming the aerosol is chemically inert with respect to the sample, at least at the temperature of aerosol formation, and because the aerosol remains stable and homogeneous at least until its introduction into the system of chromatographic analysis. For these reasons, the gaseous substance can be suitably constituted by air or by the same carrier used in the chromatographic system, while aerosol stability is assured, for the time required, when its drops are, in general, less than 5 μ in diameter.

As far as sample dosage in concerned, first of all it must be pointed out that the aerosol is formed under the sa me conditions in which the sample maintains its integrity at the liquid state, that is in general under essentially ambient temperature and pressure conditions. The liquid/ gas "dilution" under normal conditions is then in the region of 1/1000 or more in volume, and each single small drop of liquid has in general a diameter of 1 μ or less and therefo re a volume around millesimals of picoliter.

0068217

Therefore, supposing to introduce into the chromatogra
phic system 1 ul, namely 1 $mm^3$ of aerosol with 1/1000 dilu
tion, this means to introduce a nanoliter of sample formed
by a number of drops as large as $1.10^5 \div 1.10^6$, namely as
high as to assure sample uniformity even in the case of
sampling with smaller amounts. It is then extremely easy
to perform any desired dosage, in even very small amounts,
with severe control and absolute reproducibility.

What stated above clearly shows that the method of this
invention can be carried-out following different procedures,
both relating to the formation of the aerosol and the intro
duction of a volumetrically measured amount of same into
the system of chromatographic analysis. First of all, the
aerosol can be formed in a closed container, from which a
portion is drawn by means of conventional devices (microsyringe or other) capable to introduce the whole portion or
part of it into the chromatographic system, dosing the same
at the moment of the drawing or at the moment of the injection. Alternatively, the aerosol can be formed in an open
duct, which can be directly connected to the chromatographic
system, said aerosol formation occurring in a continuous or
discontinuous way. In the first case, a continuous current
of aerosol is obtained, part of which must be introduced
into the chromatographic system using conventional means
(microsyringe or other) or temporarily deviating said current
towards the chromatographic system. In case of a discontinuous aerosol formation, said aerosol forms a flush which
is sent towards the chromatographic system and from which
a measured portion is taken, before introduction into the
analyzer, by means of systems acting on time (delay line
and drawing of a time controlled portion of the aerosol flush) or on flow, according to the usual splitting techni-
que. It must be noticed that in the present case this
splitting technique does not involve discrimination because a maximum aerosol uniformity is attained in the splitting zone.

Two or more of said methods of aerosol drawing and dosage could be used in series, to obtain particularly reduced dosages or to simplify the structure of the devices per-
forming said dosages. In particular it will be possible
to use the splitting  technique downstream of a first dosing
device, for instance of the switching type, acting on an
aerosol current.

Using the sampling method according to the invention, it
is possible to form an aerosol including a predetermined
amount of sample for each unitary volumetric amount of same,
the formation of said aerosol being performed with a sample
quantity which is measured and which, as a principle, can
be whatever. It is then possible to take an amount of aero-
sol which presents a volumetric value for instance as high
as that of the samplings usually perfomed in chromatographic
systems, but which  obviously contains a very small amount
of liquid sample, and then to introduce the whole quantity
of part of it, into the chromatographic system in a measurable and accurately controllable  way, on the basis of the
liquid dilution in the aerosol and of the quantity of aero-
sol taken.

Figure 1 is a diagrammatic view showing a sampling method and device according to the invention, with formation
of aerosol inside a closed container.

Figure 2 is a diagrammatic view showing a sampling method and device according to the invention, with formation
of a continuous current of aerosol and temporary deviation
of same towards the chromatographic system.

Figures from 3 to 6 are diagrammatic views of different
possible systems for aerosol formation, in a continuous or
discontinuous way.

Figure 7 is a diagrammatic   view of different possibilities for dosing an aerosol supply.


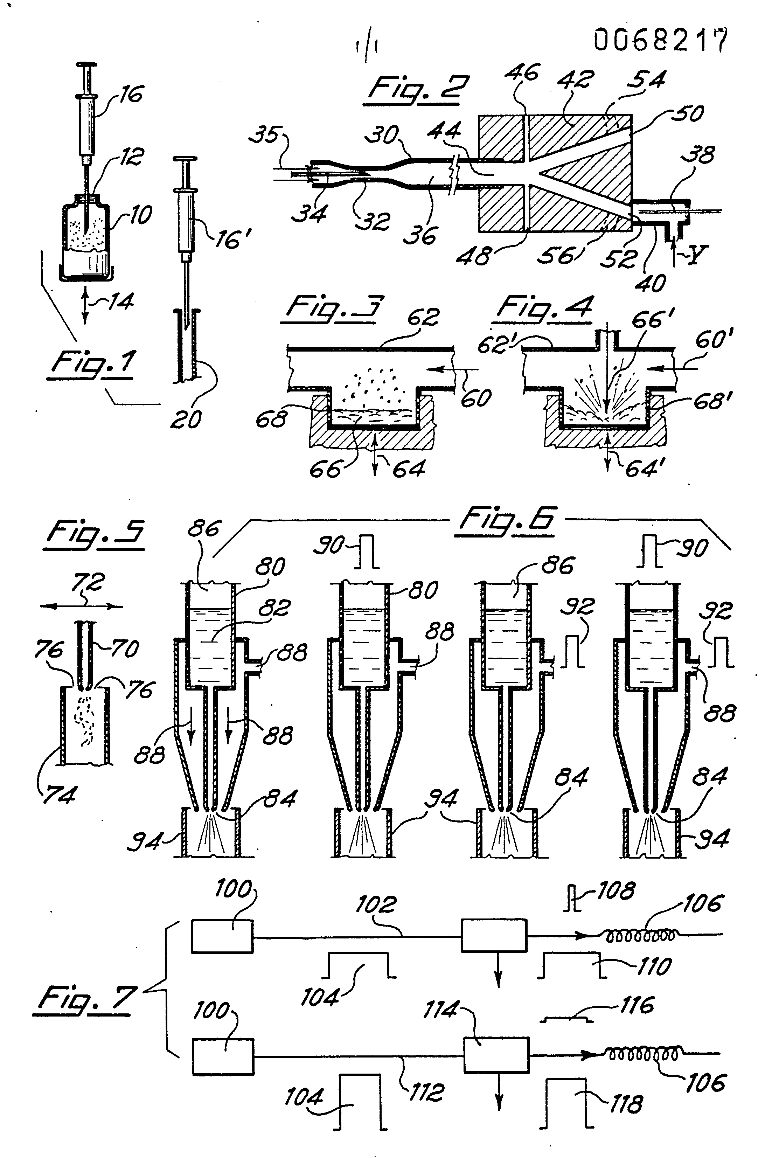

Referring first of all to fig. 1, a container 10, having
a known internal volume, is closed on the top by an element
12, for instance a pierceable septum, capable of allowing
the introduction of a syringe needle, though  assuring pneumatic sealing. The container 10 contains a gas volume, for
example air at room temperature and pressure, and is submit
ted to a vibration, as depicted by arrow 14, which can be
of any suitable type, preferably a ultrasonic vibration. The
container 10, when submitted to vibrating action 14, receives the liquid  sample, for example by means of a conventio
nal syringe 16, and an aerosol is formed therein eventually
with the help of a liquid injection under pressure and with
impact against the surface submitted to vibration. Just as
for the gas, also the liquid quantity introduced into the
container can be volumetrically determined so as to be, for
instance as large as the amounts of liquid sample which are
usually handled with microsyringes 16 of the shown type.

Once the aerosol is formed, with a liquid/gas volumetric
ratio well known and determined, a certain amount of the sa
me can be picked up for instance by means of a syringe 16'
similar to that previously used, by which a measured quanti

0068217

ty, lower or equal to the previous one, is injected into the chromatographic system 20.

Assuming that the volumetric quantity supplied to the chromatographic system by the microsyringe 16' is known, it is possible to know the amount of liquid sample injec ted, constituting a fraction of that introduced into the container 10.

It is clear that, instead of microsyringes 16, 16', other devices could be used, well known in the field and capable of performing the same dosing functions.

The invention can also provide a formation of the aero sol in an open duct, forming a continuous current of aerosol, or a discontinuous aerosol "pulse". In the first case, the aerosol can still be picked up by means of a microsyringe or similar device, or the continuous current of the same can be temporarily deviated towards the chromatographic sy stem. An example of actual use of the latter system is shown in fig. 2, where it can be seen that a current of an inert gas is fed as indicated by arrows 35, for example to a nebulizing tube 30, with a relatively high capacity. Immediately upstream the neck 32 of nebulizer, an injection device 34 can be mounted by means of which a predetermined volumetric quantity of liquid sample to be analysed is injected. This liquid sample is carried by the gas flow 35 and forms an aerosol having the desired physical properties, which is then introduced downstream into the passage 36. Only a small portion of this aerosol flow is sent to the chromatographic system, comprising for instance a capillary column 38 housed inside an element 40 conveying the carrier (according to arrow y).

For the supply of an extremely reduced quantity of the aerosol flow, to the chromatographic system and in particular to column 38, a logic fluidic system, generically indicated by 42, is preferably used. This fluidic system is already known in the field for sampling systems of solute vapours (see for example Studies of High Speed Gas Chromatography I. Injections of Narrow Sample Plugs Gyula Gaspar, Patrick Arpino and Georges Guichon - Journal of Cromatographic Science-Volume 15 - July 1977 pp. 256-261).

This logic fluidic device is essentially constituted by a monostable multivibrator, comprising a supply inlet **44**, two control inlets 46 and 48, two outlets 50 and 52 and two openings 54 and 56 for gas outflow. The outlet 50 corresponds to the multivibrator, stable condition while the outlet **52** is connected to the chromatographic system and corresponds to the unstable outlet.

When the inlet 46 is in its active condition (condition 1) and inlet 48 is in its inactive condition (condition 0), the current supplied to inlet 44 is sent to the outlet 52 and then to the chromatographic system 38. It is possible, using known means, to control in time said connection, so as to transfer to the chromatographic system a measured and reproducible quantity of the aerosol current and therefore a measured and reproducible quantity of the liquid sample to be analysed, said sample amount being able to be controlled at will up to extremely low values, either by controlling the supply times to the chromatographic system, or by controlling the "dilution" ratio in the aerosol formation upstream said monostable multivibrator 42.

The nebulizer system as hereinabove shown can also run in a discontinuous way, when a limited amount of liquid is introduced through the injector 34.

On the other hand, the means for aerosol formation, both in a continuous and in a discontinuous way, can be the

0068217

most different ones, among which for example those illustrated in figures 3 to 6. In the configuration of figure
3, a gas flow 60, in a duct 62, removes the liquid droplets as obtained by submitting to vibration (arrow 64) a
certain amount 66 of sample liquid in a container 68. In
fig. 4, substantially the same device has an introduction
of liquid 66' into container 68' as a flush  going against
a wall of said container.

In fig. 5 a nozzle 70 for liquid outlet is submitted to
vibration as indicated by 73 to form an aerosol inside an
element 74 which can be in the form of a closed container
containing gas, or of a conveyor to which gas is supplied
as indicated by 76.

Finally, the configuration of fig. 6 comprises a container
80 for the fluid 82, with a nozzle 84 for outflow under
pressure (zone 86) of the same liquid in correspondence
with a zone of gas flow supply (arrows 88). The mechanical
action of the nozzle 84 and of gas flow works to form said
aerosol conveyed to the tube 94. This device can be applied
either considering a continuous supply of pressure in 86 and
of gas current in 88, or considering discontinuity, with
emission of a rectangular pulse, in correspondence to one
or both supplies 86, 88. So, it is possible to have a pres-
sure pulse 90 with a continuous gas flow 88, a continuous
pressure supply 86 with a rectangular pulse 92 of gas flow,
or two pulses of pressure 90 and gas flow supply 92, respec-
tively  which obviously will get superimposed at least
partly in time.

Other methods for aerosol formation can comprise piezoe-
lectric transducers for the formation of a jet of droplets,
or ultrasound systems to break a continuous liquid jet into
droplets.

The above mentioned examples can produce a continuous current or a "pulse" of aerosol, the continuous current being able to be converted into a pulse for instance by means of the switching device of fig. 2. In case a "pul se" of aerosol is formed, the dosage of part of same can be effected by acting on time or on volumes, according to two solutions schematically shown in fig. 7. The first solution comprises, downstream an aerosol gene rator 100, a delay line 102 sending a pulse 104 to a ti me separator capable to feed to the chromatographic system 106 a pulse 108 correlated to the starting pulse and having a reduced duration in comparison with the original pulse. The remaining part 110 of the starting pulse is discharged. According to the second solution, the pulse 104 is supplied through line 112 to a normal splitting device 114 which performs volumetric partition of pulse 104 as shown in 116 and 118. This splitting device can be used in all the cases in which a discontinuous pulse of aerosol is formed even downstream of other metering devices, for instance downstream a switching device as that shown in fig. 2.

It is to be understood that many modifications can be carried-out to the shown methods and devices, without departing from the spirit and scope of this invention.

0068217

CLAIMS

1) A sampling method specially for small amounts of a liquid sample in chromatographic analysis systems, comprising the steps of forming, with the sample liquid and a gaseous substance, an aerosol, stable and homogeneous at least for the time between its formation and its injection into the chromatographic system, said aerosol having a predetermined liquid/gas dilution ratio, and of introducing a volumetrically predetermined quantity of said aerosol into the chromatographic system.

. 2) A sampling method according to claim 1, wherein said aerosol is formed with drops having an average diameter less than 5 u, under pressure conditions substantially corresponding to the ambient ones and under temperature conditions substantially corresponding to or lower than the ambient ones.

3) A sampling method according to claim 1 or 2, wherein said aerosol is formed with a gaseous substance chemically inert versus the liquid sample at least at the aerosol formation temperature.

4) A sampling method according to one of the preceding claims, wherein said aerosol is formed in a closed container submitted to vibration, with a predetermined liquid/gas ratio wherein part of said aerosol is picked-up and wherein a volumetrically determined quantity of same aerosol part is supplied to a chromatographic system.

0068217

5) A sampling method according to claim 4, and comprising the steps of providing a container containing said gas and clo
sed by a pierceable septum; supplying a measured amount
of sample liquid to the inside of said container, when sub
mitted to vibration, by means of a syringe provided with
a needle capable of piercing said septum, with formation of
a stable aerosol in said container; drawing a quantity of
said aerosol from said container by means of a syringe having a needle capable to pierce said septum, and supplying
a measured quantity of said drawn aerosol, by means of said
syringe, to a chromatographic system.

6) A sampling method according to one of claims 1 to 3,
wherein said aerosol is formed in an open duct, and wherein
part of said aerosol is drawn for measured supply to a
chromatographic system.

7) A sampling method according to claim 6, wherein a substantially continuous flow of aerosol is formed and wherein
said flow is deviated towards a chromatographic system for
a predetermined time period, to feed therein an aerosol mea
sured quantity.

8) A sampling method according to claim 6, wherein a mea
sured quantity of aerosol is formed, said quantity is supplied
to the chromatographic system and a predetermined percentage
of said quantity is introduced into a chromatographic system.

9) A sampling method according to claim 4, 7 or 8, wherein a measured quantity of aerosol is fed toward a chroma-

- 3 -

0068217

tographic system and wherein a measured percentage of said quantity is introduced into said chromatographic system, by partition of the measured quantity according to known splitting techniques.

10) A sampling method according to claim 4, 7 or 8, wherein a measured quantity of aerosol is fed toward a chromatographic system as substantially square-wave pulse and wherein a measured percentage of said quanti ty is introduced in said chromatographic system, by time partition of said pulse.

11) A sampling device, specially for small amounts of liquid sample, in chromatographic analysis systems comprising means for the formation of an aerosol, stable and homogeneous at least for the time period between its formation and its introduction into the chromatographic system, with said liquid sample and a gas, with a predetermined liquid/gas dilution ratio, and means to introduce a volumetrically measured quantity of said ae rosol into a chromatographic system.

12) A sampling device according to claim 11, wherein said means for the formation of a stable aerosol compri se means for mechanically stressing at least parts of said liquid, in presence of said gas, with formation of a continuous aerosol current or of a discontinuous ae rosol current pulse.

13) A sampling device according to claim 12, wherein said means for mechanically stressing said liquid compri se vibrating means preferably by ultrasounds.

14) A sampling device according to claim 12, wherein said means for mechanically stressing said liquid comprise at least a nozzle for forming a continuous jet or pulse jets.

15) A sampling device according to claim 14, wherein said means for mechanically stressing said liquid compri se means to break said jet into aerosol forming droplets by means of a pressure difference, impact against solid surfaces and/or action of gaseous currents or of electro magnetic control means.

16) A sampling device according to claim 14, and comprising a piezoelectric system for forming said jet.

17) A sampling device according to claim 11, whereing said means to introduce a measured quantity of aerosol into said chromatographic system comprise a microsyringe.

18) A sampling device according to claim 11, wherein said means to introduce a measured quantity of aerosol into said chromatographic system comprise a fluidic monostable multivibrator which is fed with an aerosol cur rent and has an unstable oulet connected to said chroma tographic system, as well as a control means to switch said multivribrator to its unstable outlet for predeter mined time periods.

19) A sampling device according to claim 11, wherein said means to introduce a measured quantity of aerosol in to said chromatographic system comprise a feeding means for supplying toward said chromatographic system, in a

0068217

discontinuous way, a measured volume of aerosol, and
a splitting device, downstream said feeding means
for introducing into said chromatographic system a
percentage of said volume corresponding to said mea-
sured quantity.

Fig. 1
Fig. 2
Fig. 3
Fig. 4
Fig. 5
Fig. 6
Fig. 7

0068217

1/1